# EUROPEAN PATENT SPECIFICATION

(11) **EP 3 761 837 B1**
(45) Date of publication and mention of the grant of the patent: **20.04.2022**
(21) Application number: 19715986.6
(22) Date of filing: 06.03.2019
(51) Int. Cl.: A47J 37/06

(54) **APPLIANCE FOR COOKING FOOD WITH HEATING PLATES**
GERÄT ZUM KOCHEN VON LEBENSMITTELN MIT HEIZPLATTEN
APPAREIL DE CUISSON D'ALIMENTS À PLAQUES CHAUFFANTES

(30) Priority: 06.03.2018 IT 201800003320
(43) Date of publication of application: 13.01.2021
(73) Proprietor: Bitfood S.r.l., 20122 Milano (IT)
(72) Inventor: GAIBAZZI, Andrea, 43015 Noceto (Parma) (IT)
(74) Representative: Di Bernardo, Antonio
(86) International application number: PCT/IB2019/051791
(87) International publication number: WO 2019/171283

(56) References cited:
- WO-A1-2015/164489
- GB-A- 2 355 390
- US-A- 5 341 727
- US-A1- 2007 221 653

## Description

### TECHNICAL FIELD

The present invention relates to appliances for cooking food. In particular, the present invention relates to cooking appliances of the heating plate type.

For the sake of brevity, the following description will refer to an appliance for cooking bread, but that described may be applied to any type of appliance for cooking food.

### BACKGROUND ART

Appliances for cooking food of the plate type are known, which are used in restaurants for cooking or merely heating food.

Such appliances typically comprise a pair of opposed heating plates reciprocally moved by suitable displacement means. The plates are provided with relative heating surfaces between which the foods to be cooked or heated are arranged. Some of the aforesaid appliances further comprise several pairs of heating plates arranged side-by-side but simultaneously actuated by the same displacement means.

In use, the heating surfaces face one another, with the interposition between these of the food to which they transfer the heat required for heating or cooking mainly by thermal conduction.

The simplest cooking appliances comprise displacement means of the plates obtained by means of one or more hinges placed on one of the sides of the appliance and to which the same plates are coupled. In this way, the reciprocal movement of the plates is obtained by rotating one of the plates of the movable type, with respect to the plate of the fixed type, by means of the actuation of the hinges.

To improve the heating characteristics, further displacement means are known, which are able to obtain the reciprocal movement of the plates by keeping the parallelism therebetween, i.e. between the relative heating surfaces, rather than distancing them with respect to a fixed fulcrum. For that purpose, American

Patent No. US5640895A describes a heating appliance of the plate type in which the displacement means are made by means of a system of the parallelogram type, which allows a movement of the heating surfaces of the aforesaid plates while keeping the parallelism.

However, such movement of the parallel type results in increased overall dimensions in terms of volume occupied by the movable plate during the movement, and also an increased difficulty in the steps of introducing and extracting the food to be processed.

A further appliance for cooking food provided with improved plate displacement means is described in International Patent Application No. WO2018002840. In this case, the overall dimensions of the displacement means are reduced by using telescopic elements that ensure the movement required by the plates while reducing the impact in volume of the same displacement means. Although they improve the aspect of overall dimensions, the displacement means of the telescopic type increase the problems inherent to the maintenance thereof, in any case being subject to a significant and repeated load for an increased number of cycles. Document US5341727A discloses a further appliance for cooking food with a pair of opposed heating plates.

It would therefore be desirable to provide an appliance for cooking food able to minimize the above drawbacks. In particular, it would be desirable to provide an appliance for cooking food able to reciprocally move the heating plates so as to obtain as much of a uniform cooking of the foods as a simplification of the operations of introducing and extracting foods between/from the same plates.

### OBJECT AND SUMMARY OF THE INVENTION

The object of the present invention is to provide an appliance for cooking food able to minimize the aforesaid problems.

In particular, the object of the present invention is to provide an appliance for cooking food able to allow an optimal movement of the plates and at the same time, reduce the volume required for using the appliance and the maintenance costs associated therewith.

The above-mentioned objects are achieved by an appliance for cooking food according to the appended claims.

The appliance for cooking food comprises:
- a first heating plate provided with a first heating surface and a second heating plate provided with a second heating surface;
- displacement means able to reciprocally move the first heating plate and the second heating plate between a working position, wherein the first heating surface and the second heating surface are arranged parallel to each other and at the minimum separation distance, and a rest position, wherein the first heating surface and the second heating surface are arranged inclined to each other and at the maximum distance of separation;
the appliance for cooking food is characterized in that the displacement means are able to reciprocally move the first heating plate and the second heating plate with a roto-translation movement.

The term *"working position"* in the present invention means the position in which the heating plates allow transferring the greatest quantity of heat to the food in relation to the least distance therebetween.

The term *"rest position"* in the present invention means the position in which the heating plates allow transferring the smallest quantity of heat to the food in relation to the greatest distance therebetween.

The term *"reciprocally moving"* in the present invention means the movement of a plate, defined movable, with respect to the remaining plate, defined fixed. The same term may mean the simultaneous movement of both plates, close to or away from a fixed frame.

The term *"roto-translation movement"* in the present invention means the simultaneous translation and rotation movement obtained by moving the movable plate with respect to the fixed plate, i.e. by simultaneously moving both plates. In the same manner, the roto-translation movement may be obtained by carrying out the translation movement and the rotation movement in different steps.

Therefore, the displacement means allow simultaneously obtaining an optimal heating of the food, thanks to the possibility of spacing apart the plates parallel, and also an optimal reciprocal arrangement of the plates during the steps of introducing and extracting the food.

According to the invention, the displacement means comprise at least one articulated mechanism with a movable fulcrum, able to define the roto-translation movement with two degrees of freedom.

In this way, the possibility is obtained of simultaneously or separately moving the plates with a translation movement or with a reciprocal rotation movement.

Preferably, the articulated mechanism with a movable fulcrum is able to move the first heating plate with respect to the second heating plate.

According to the invention, the articulated mechanism with a movable fulcrum comprises a first articulated arm and a second articulated arm defined by two separated elements and operatively connected to the first heating plate and to the second heating plate so as to define the roto-translation movement. Preferably, the first articulated arm is arranged at a shorter distance from the movable fulcrum with respect to the second articulated arm. According to the invention, the first articulated arm has a shorter extension with respect to the second articulated arm.

This allows reducing the load to which the displacement means, i.e. the relative arms, are subjected during the reciprocal movement of the plates, i.e. during the movement of the first plate of the movable type with respect to the second plate of the fixed type.

Preferably, the articulated mechanism with a movable fulcrum comprises a first fixed arm coupled to the first heating plate and a second fixed arm coupled to the second heating plate, wherein the first articulated arm has an end hinged to the second fixed arm and it has the opposite end hinged to the first heating plate, and wherein the second articulated arm has an end hinged to the first fixed arm and it has the opposite end hinged to the second fixed arm. Even more preferably, the first fixed arm extends beyond the plane of the first heating surface towards the second heating surface, and wherein the second fixed arm extends beyond the plane of the second heating surface towards the first heating surface. Moreover, the first articulated arm is hinged to the second fixed arm beyond the plane of the first heating surface towards the second heating surface, and wherein the second articulated arm is hinged to the first fixed arm beyond the plane of the first heating surface towards the second heating surface, and to the second fixed arm within the plane of the second heating surface towards the first heating surface.

Preferably, the displacement means comprise locking means of the relative position between the first heating plate and the second heating plate, wherein the locking means are hinged at one end to the second fixed arm within the plane of the second heating surface towards the first heating surface before the second articulated arm, and it has the opposite end hinged to the second articulated arm.

In this way, it is possible to lock the position taken on for example, by the movable plate to facilitate the steps of introducing or extracting the food or keeping the desired spacing in the heating step.

### BRIEF DESCRIPTION OF THE DRAWINGS

These and further features and advantages of the present invention will be apparent from the description of the preferred embodiment, illustrated by way of non-limiting example in the accompanying drawings, in which:
- Figures 1, 3, 5, 7 and 9 are perspective views of the appliance for cooking food according to the present invention, in a sequence of steps illustrating the movement of the first heating plate from the working position to the rest position.
- Figures 2, 4, 6, 8 and 10 are side plan views of the appliance for cooking food illustrated, respectively, in Figures 1, 3, 5, 7 and 9.

### DETAILED DESCRIPTION OF THE INVENTION

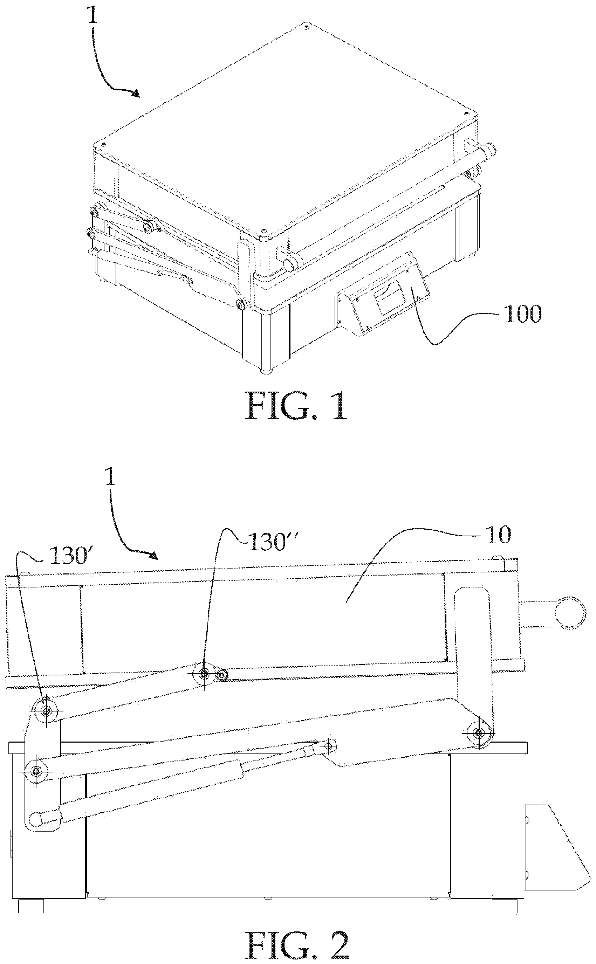

With reference to Figures 1 and 2, there is illustrated a preferred embodiment of the appliance 1 for cooking food according to the present invention. In particular, the present embodiment relates to an appliance 1 for cooking food containing yeasts, such as for example, bread and by-products thereof. In any case, that described may be applied to any type of appliance for cooking food.

The aforesaid appliance 1 for cooking food is of the heating plate type, i.e. it comprises a pair of plates provided with heating means able to emit heat and transmit it to the food to be processed.

The pair of plates according to the present embodiment consists of a first heating plate 10 and a second heating plate 20 operatively connected to each other. In the present embodiment, the second heating plate 20 corresponds to the portion of the appliance 1 arranged on the support plane, i.e. it defines the fixed plate. The first heating plate 10 instead corresponds, in the present embodiment, to the movable plate with respect to the aforesaid fixed plate. Both the first heating plate 10 and the second heating plate 20 have a rectangular-based prismatic geometric, but different geometries fall under the same inventive concept. In particular, each of the heating plates 10, 20 comprises a frame, preferably made of high temperature resistant metal or plastic material that defines the perimeter walls of the appliance 1 itself.

The heating means in the present embodiment comprise suitable electrical resistances, preferably of the coil type, arranged in each heating plate 10, 20, i.e. in the relative frame defining it. The aforesaid heating means (not illustrated) are able to transmit the heat to the food to be processed by conduction and are further connected to a control unit 100 with which the user is able to modify and control the desired heating temperature. The control unit 100 further allows controlling the temperature of selective type for each of the first heating plate 10 and the second heating plate 20.

Further embodiments (not illustrated) may comprise a plurality of pairs of heating plates arranged side-by-side one another, or heating means of different type.

Each of the aforesaid heating plates 10, 20 is provided with a heating surface, defined respectively first heating surface (not illustrated) and second heating surface (120), which are connected with the respective heating means for the thermal transmission of the heat. In particular, the first heating surface and the second heating surface 120 in the present embodiment have the same shape defined by a flat portion 120' in which there are obtained a plurality of cavities 120" defining semi-moulds able to house the food to be processed, for example, the dough with yeast to be cooked.

According to alternative embodiments (not shown), one or both the heating surfaces may be shaped differently, for example, have a completely flat surface.

In the same manner, the circular-shaped cavities illustrated could be defined according to any shape, which may be defined each time as a function of the client's needs.

The appliance 1 for cooking food further comprises suitable displacement means 31, 32 able to reciprocally move the first heating plate 10 and the second heating plate 20 with a roto-translation movement.

The term *"reciprocally move"* in the present embodiment means the movement of the movable plate, defined by the first heating plate 10, with respect to the fixed plate, defined by the second heating plate 20.

Furthermore, the term *"roto-translation movement"* in the present embodiment means the simultaneous translation and rotation movement obtained by moving the movable plate, defined by the first heating plate 10, with respect to the fixed plate, defined by the second heating plate 20.

Therefore, the displacement means 31, 21 allow simultaneously obtaining an optimal heating of the food, thanks to the possibility of spacing apart the heating plates 10, 20 while keeping the parallelism, and also an optimal reciprocal arrangement of the heating plates 10, 20 during the steps of introducing and extracting the food. The movement trajectory is such that the roto-translation movement of the final portion of the same trajectory, i.e. direction and substantially at the *"rest position",* allows reducing the overall dimensions of the appliance 1 for cooking food at the back, i.e. by arranging the first cooking plate 10 behind the second cooking plate 20, despite the arrangement in rotation. Therefore, the translation in the final part of the trajectory moves close to the aforesaid plates 10, 20 rather than away therefrom, as instead is preferable in the first part of the trajectory. In this way, it is possible to arrange the appliance 1 for cooking food on traditional work benches, for example having depth equal to 80 cm.

The displacement means 31, 32 comprise a pair of articulated mechanisms arranged on opposite sides of the appliance 1 for cooking food. In particular, each articulated mechanism 31, 32 is arranged on the sides not involved by the rotation movement, i.e. at the perimeter walls of each of the aforesaid heating plates 10, 20. In a further embodiment (not illustrated), the displacement means may also comprise one of the aforesaid articulated mechanisms alone.

Each of the articulated mechanisms 31, 32 is of the movable fulcrum type, i.e. able to define a rotation with centre of instantaneous rotation of the movable type. This allows the articulated mechanisms 31, 32 to define a roto-translation movement that has two degrees of freedom. In particular, the articulated mechanism (31, 32) with a movable fulcrum is able to move the first heating plate 10 with respect to the second heating plate 20 according to a translation and/or rotation movement by combining or separating the two degrees of freedom in the movement.

In this way, it is possible to obtain simultaneously or separately moving the plates with a translation movement or with a reciprocal rotation movement.

The articulated mechanism 31, 32 allows the movement of the first heating plate 10 with respect to the second heating plate 20 between a working position and a rest position.

The term *"working position"* in the present embodiment means the position in which the heating plates 10, 20 allow transferring the greatest quantity of heat to the food in relation to the shortest distance therebetween. In particular, the first heating surface and the second heating surface 120 are arranged parallel to each other and at the minimum separation distance in the working position. Preferably, such working position corresponds to the coupling position of the relative heating plates 10, 20 so as to obtain a complete closing of the appliance 1 for cooking food along the perimeter walls of the same heating plates 10, 20.

The term *"rest position"* in the present embodiment means the position in which the heating plates 10, 20 allow transferring the smallest quantity of heat to the food in relation to the greatest distance therebetween. In particular, the first heating surface and the second heating surface 120 are inclined to each other and at the maximum distance of separation in the rest position. Preferably, such rest position corresponds to the position of maximum roto-translation of the first heating plate 10 with respect to the second heating plate 20 so as to obtain the maximum opening of the appliance 1 for cooking food.

The articulated mechanism 31, 32 with a movable fulcrum comprises a first articulated arm 131, 132 and a second articulated arm 231, 232, each placed at the perimeter walls of each of the aforesaid heating plates 10, 20. Both the articulated arms 131, 132, 231, 232 are operatively connected as much to the first heating plate 10 as to the second heating plate 20 so as to define the roto-translation movement. However, the first articulated arm 131, 132 and the second articulated arm 231, 232 are defined by two separated elements and therefore operatively connected, but not directly connected, for the purposes of the roto-translation movement.

The aforesaid articulated arms 131, 132, 231, 232 are not directly operatively connected to the relative heating plates 10, 20 of the appliance 1 for cooking food but rather to suitable fixed arms that act as connecting element. In particular, the articulated mechanism 31, 32 herein described is provided with a first fixed arm 331, 332 coupled to the first heating plate 10 and with a second fixed arm 431, 432 coupled to the second heating plate 20.

Also the first fixed arm 331, 332 and the second fixed arm 431, 432 are defined by two separated elements and therefore operatively connected, but not directly connected, for the purposes of the roto-translation movement. The shape of the aforesaid fixed arms 331, 332, 431, 432 is similar and consists of an elongated element, i.e. a plate, that has a greater extension for the first fixed arm 331, 332.

Taking as reference the first heating surface (not illustrated) and the second heating surface 120, the first fixed arm 331, 332 is coupled to the perimeter wall of the first heating plate 10 and extends beyond the plane of the first heating surface towards the second heating surface 120. The second fixed arm 431, 432 extends beyond the plane of the second heating surface 120 towards the first heating surface.

Therefore, the first fixed arm 331, 332 protrudes outside the shape defined by the frame of the respective heating plate 10, 20 to which it is integrally coupled as much as the second fixed arm 431, 432, preferably along a direction perpendicular to the plane defined by the aforesaid heating surfaces. The projection direction and the distance from the respective frames may be varied as a function of the sizing of the articulated mechanism 31, 32 or of the roto-translation movement to be obtained.

The shape of the aforesaid articulated arms 131, 132, 231, 232 is similar and consists of an elongated element, i.e. a lever, that has the ends provided with suitable hinges for the connection with the fixed arms 331, 332, 431, 432 or with the heating plates 10, 20, as described in greater detail below.

In particular, the first articulated arm 131, 132 has a shorter extension with respect to the second articulated arm 231, 232. This allows reducing the load to which the displacement means 31, 32, i.e. the relative arms 131, 132, 231, 232, are subjected during the reciprocal movement of the plates, i.e. during the movement of the first heating plate 10 of the movable type with respect to the second heating plate 20 of the fixed type.

Moreover, to obtain the desired roto-translation effects, the first articulated arm 131, 132 is arranged at a shorter distance from the movable fulcrum with respect to the second articulated arm 231, 232. In particular, although it is modified along the movement trajectory defined by the articulated mechanism 31, 32, each spacing of the aforesaid articulated arms 131, 132, 231, 232 with respect to the movable fulcrum keeps the aforesaid characteristics of relative spacing.

In the embodiment herein described, the second articulated arm 231, 232 has such a shape as to identify two separate portions. In particular, a first portion having similar sizes to the ones of the first articulated arm 131, 132 in relation to the width of the elongated element, and a second portion, adjacent to the first portion, that has a greater width and a seat for coupling with the locking means, which are described in greater detail below.

Each articulated arm 131, 132, 231, 232 is provided at the ends thereof with a hinge for coupling to the appliance 1 for cooking food, or with a portion thereof, to obtain the positioning of the fulcrum outside the area defined by the articulated mechanism 31, 32 or to contribute to the design of fulcrum of movable type for defining the movement trajectory. As is known, the hinges allow a single level of freedom alone in the movement defined by the rotation movement about the axis of the same hinge.

The first articulated arm 131, 132 has an end hinged to the second fixed arm 431, 432 by means of a hinge 130', and it has the opposite end hinged directly to the first heating plate 10 by means of hinge 130", which allows coupling with the frame of the aforesaid heating plate 10. Taking the aforesaid second fixed arm 431, 432 as a reference, the first articulated arm 131, 132 is hinged to the latter beyond the plane of the first heating surface towards the second heating surface 120. Therefore, the identification of the coupling position is defined when the two heating surfaces 120 are parallel and by identifying the positions with respect to the perimeter frame, i.e. the first articulated arm 131, 132 is hinged to the second fixed arm 431, 432 at the portion thereof that protrudes from the perimeter frame of the second heating plate 20.

Contrarily to that described above for the first articulated arm 131, 132, the second articulated arm 231, 232 has an end hinged to the first fixed arm 331, 332 by means of a hinge 230', and it has the opposite end hinged to the second fixed arm 431, 432 by means of a hinge 230". Taking the aforesaid first fixed arm 331, 332 as a reference, the second articulated arm 231, 232 is hinged to the latter beyond the plane of the first heating surface towards the second heating surface 120. Therefore, the second articulated arm 231, 232 is hinged to the first fixed arm 331, 332 at the portion thereof that protrudes from the perimeter frame of the first heating plate 10. In the same way, taking the aforesaid second fixed arm 431, 432 as a reference, the second articulated arm 231, 232 is hinged to the latter within the plane of the second heating surface 120 towards the first heating surface. Therefore, the second articulated arm 231, 232 is hinged to the second fixed arm 431, 432 at the portion thereof that does not protrude from the perimeter frame of the first heating plate 10.

Finally, the displacement means 31, 32 according to the present embodiment are provided with locking means 531, 532 of the relative position between the first heating plate and the second heating plate 120. Such means 531, 532 might not be further provided in further embodiments.

The locking means 531, 532 are achieved in the present embodiment by a telescopic rod provided with a spring therein, preferably of the air type and preloaded, designed to ensure the position is kept in all the movement steps of the heating plate 10 and to minimize the user's effort in all steps. In particular, the locking means 531, 532 are hinged at one end to the second fixed arm 431, 432 within the plane of the second heating surface 120 towards the first heating surface, before the second articulated arm 231, 232. Therefore, taking as reference the aforesaid second fixed arm 431, 432, the locking means 531, 532 and the second articulated arm 231, 232 are respectively hinged in sequence at the perimeter wall of the second heating plate 20 and towards the second heating surface 120. The first articulated arm 131, 132 equally is hinged in sequence to the aforesaid elements but is arranged outside the perimeter wall and therefore beyond the heating plane 120. The same locking means 531, 532 further have the opposite end hinged to the second articulated arm 231, 232. In particular, the locking means 531, 532 are hinged to the second portion of the second articulated arm 231, 232 at the seat defined for coupling the aforesaid locking means 531, 532. Further embodiments are possible for the aforesaid locking means without modifying the inventive concept according to the present invention.

In this way, it is possible to lock the position taken, for example, by the movable plate, i.e. by the first heating plate 10, to facilitate the steps of introducing or extracting the food or keeping the desired spacing in the heating step.

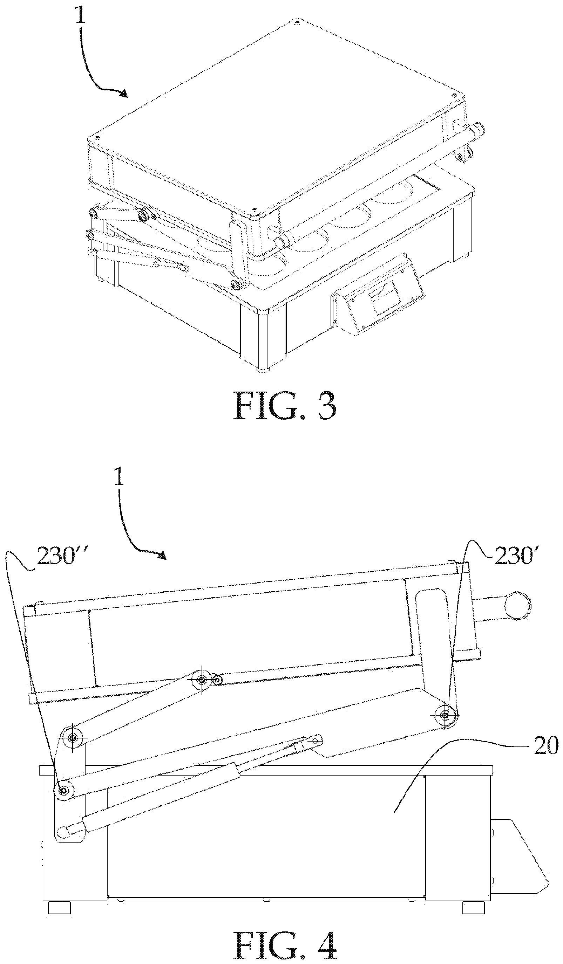

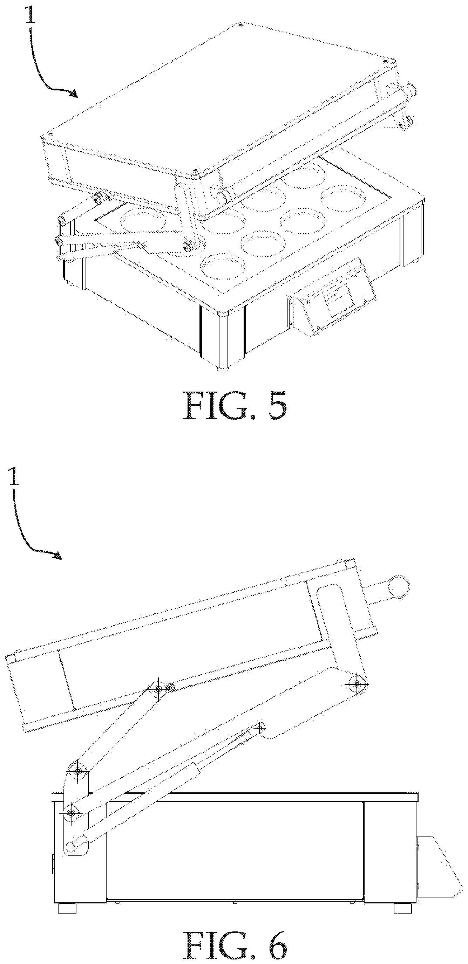

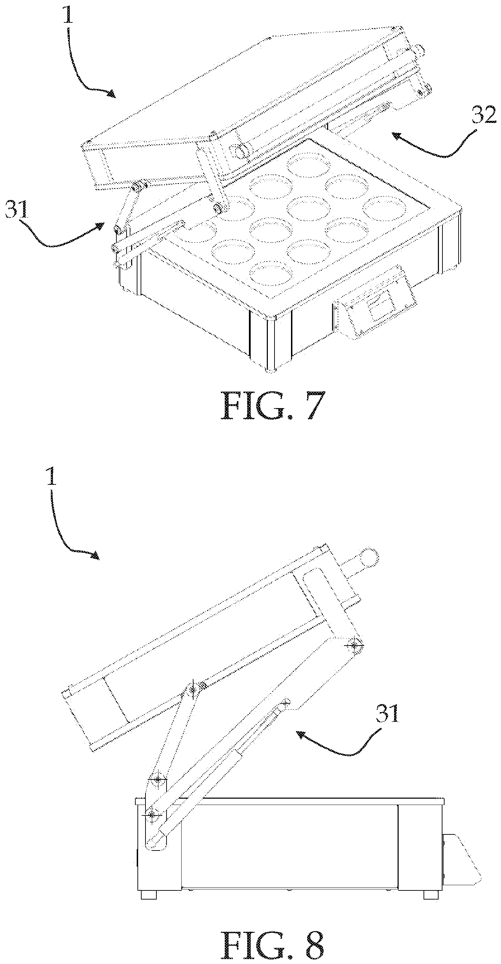

The sequence of Figures 1, 3, 5, 7 and 9, or the relative side plan views 2, 4, 6, 8 and 10, illustrate the sequence of steps defining the movement of the first heating plate 10 from the working position to the rest position.

It is hypothesized that the appliance 1 for cooking food initially is arranged in working position, but with the heating plates 10, 20 disabled, i.e. such as not to transmit any heat.

Therefore, the user is to proceed with the movement of the first heating plate 10 to access the heating surfaces 120 and introduce the food to be processed. As shown by way of example in the aforesaid drawings, the movement of the heating plate 10 is obtained with a roto-translation trajectory in which the same performs as much of a rotation movement as a translation movement with respect to the second heating plate 20. In all points of the trajectory, by releasing the first heating plate 10, the user obtains a locking of the trajectory by means of the locking means 531, 532, which counter the return action of the same first heating plate 10 due to the motion generated by the force of gravity.

The articulated mechanism 31, 32 further allows modifying the rotation or the translation of the first heating plate 10 when it is locked in a given position. The movement according to the rotation alone or the translation alone is determined by means of the articulated arms 131,132, 231, 232 and the sizing thereof. In this embodiment, the aforesaid movements are limited but in any case are such as to allow an improved access to the heating surfaces 120, an improved arrangement of the heating plates 10, 20, or the possibility of containing the overall dimensions according to the vertical or horizontal direction with respect to the support plane.

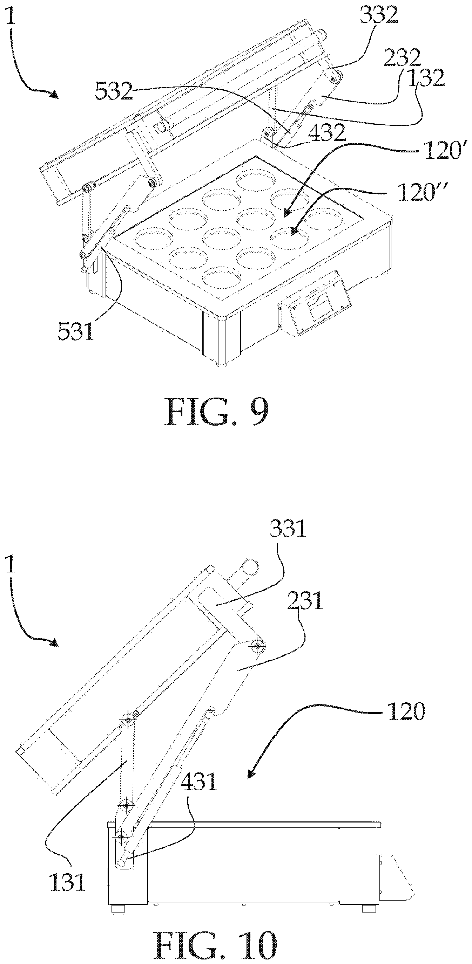

In the last step of the sequence (illustrated in Figures 9 and 10), the first heating plate 10 is in the position of maximum distance from the second heating plate 20, which is defined as rest position. Therefore, such a distancing allows a simple introduction of the food at the heating surfaces, i.e. within the relative cavities 120" defining the semi-moulds able to house the food to be processed.

The sequence remains the same with inverted steps for arranging the first heating plate 10 from the rest position to the working position.

The appliance for cooking food according to the present invention allows the movement of the first heating plate, i.e. of the plate defined movable, as much in rotation as in translation to obtain the simplification of the steps of introducing and extracting the food. At the same time, the overall dimensions in terms of volume and/or footprint used by the appliance for cooking foods is significantly reduced with respect to the known solutions. Moreover, the articulated mechanism according to the present invention allows a reduction of the number of mechanical elements used and accordingly, the reduction or complete elimination of the telescopic systems requiring more frequent maintenance.

## Claims

1. Appliance (1) for cooking food comprising:
- a first heating plate (10) provided with a first heating surface and a second heating plate (20) provided with a second heating surface (120);
- displacement means (31, 32) able to reciprocally move said first heating plate (10) and said second heating plate (20) between a working position, wherein said first heating surface and said second heating surface (120) are arranged parallel to each other and at the minimum separation distance, and a rest position, wherein said first heating surface and said second heating surface (120) are arranged inclined to each other and at the maximum distance of separation;
wherein said displacement means (31, 32) are able to reciprocally move said first heating plate (10) and said second heating plate (20) with a roto-translation movement,
wherein said displacement means (31, 32) comprises at least an articulated mechanism with a movable fulcrum, able to define said roto-translation movement with two degrees of freedom,
wherein said articulated mechanism (31, 32) with a movable fulcrum comprises a first articulated arm (131, 132) and a second articulated arm (231, 232) defined by two separated elements and operatively connected to said first heating plate (10) and said second heating plate (20) so as to define said roto-translation movement, **characterized in that**
wherein said first articulated arm (131, 132) has a shorter extension with respect to said second articulated arm (231, 232).

2. Appliance (1) for cooking food according to claim 1, wherein said articulated mechanism (31, 32) with a movable fulcrum is able to move said first heating plate (10) with respect to said second heating plate (20).

3. Appliance (1) for cooking food according to claim 1 or 2, wherein said first articulated arm (131, 132) is arranged at a shorter distance from said movable fulcrum with respect to said second articulated arm (231, 232).

4. Appliance (1) for cooking food according to one or more claims from 1 to 3, wherein said articulated mechanism (31, 32) with a movable fulcrum comprises a first fixed arm (331, 332) coupled to said first heating plate (10) and a second fixed arm (431, 432) coupled to said second heating plate (20),
wherein said first articulated arm (131, 132) has an end hinged to said second fixed arm (431, 432) and it has the opposite end hinged to said first heating plate (10), and
wherein said second articulated arm (231, 232) has an end hinged to said first fixed arm (331, 332) and it has the opposite end hinged to said second fixed arm (431, 432).

5. Appliance (1) for cooking food according to claim 4, wherein said first fixed arm (331, 332) extends beyond the plane of said first heating surface towards said second heating surface (120), and
wherein said second fixed arm (431, 432) extends beyond the plane of said second heating surface (120) towards said first heating surface.

6. Appliance (1) for cooking food according to claim 5, wherein said first articulated arm (131, 132) is hinged to said second fixed arm (431, 432) beyond the plane of said first heating surface towards said second heating surface (120), and
wherein said second articulated arm (231, 232) is hinged to said first fixed arm (331, 332) beyond the plane of said first heating surface towards said second heating surface (120) and to said second fixed arm (431, 432) within the plane of said second heating surface (120) towards said first heating surface.

7. Appliance (1) for cooking food according to claim 6, wherein said displacement means (31, 32) comprises locking means (531, 532) of the relative position between said first heating plate (10) said second heating plate (20), wherein said locking means (531, 532) has an end hinged to said second fixed arm (431, 432) within the plane of said second heating surface (120) towards said first heating surface before said second articulated arm (231, 232) and it has the opposite end hinged to said second articulated arm (231, 232).

## Patentansprüche

1. Gerät (1) zum Zubereiten von Lebensmitteln umfassend:
- eine erste Heizplatte (10), die mit einer ersten Heizfläche versehen ist, und eine zweite Heizplatte (20), die mit einer zweiten Heizfläche (120) versehen ist;
- Verschiebungsmittel (31, 32), die dazu ausgebildet sind, die erste Heizplatte (10) und die zweite Heizplatte (20) zwischen einer Arbeitsposition, in der die erste Heizfläche und die zweite Heizfläche (120) parallel zueinander und mit dem minimalen Trennungsabstand angeordnet sind, und einer Ruheposition hin und her zu bewegen, in der die erste Heizfläche und die zweite Heizfläche (120) schräg zueinander und mit dem maximalen Trennungsabstand angeordnet sind;
wobei die Verschiebungsmittel (31, 32) dazu ausgebildet sind, die erste Heizplatte (10) und die zweite Heizplatte (20) mit einer Rotations-/Translationsbewegung hin- und herzubewegen,
wobei
die Verschiebungsmittel (31, 32) mindestens einen Gelenkmechanismus mit beweglichem Drehpunkt umfassen, der die Rotations-/Translationsbewegung mit zwei Freiheitsgraden definieren kann,
wobei der Gelenkmechanismus (31, 32) mit beweglichem Drehpunkt einen ersten Gelenkarm (131, 132) und einen zweiten Gelenkarm (231, 232) umfasst, die durch zwei getrennte Elemente definiert sind und mit der ersten Heizplatte (10) und der zweiten Heizplatte (20) wirkverbunden sind, um die Rotations-/Translationsbewegung zu definieren, **dadurch gekennzeichnet, dass**
der erste Gelenkarm (131, 132) in Bezug auf den zweiten Gelenkarm (231, 232) eine kürzere Ausdehnung hat.

2. Gerät (1) zum Zubereiten von Lebensmitteln nach Anspruch 1, wobei der Gelenkmechanismus (31, 32) mit beweglichem Drehpunkt derart ausgebildet ist, die erste Heizplatte (10) in Bezug auf die zweite Heizplatte (20) zu bewegen.

3. Gerät (1) zum Zubereiten von Lebensmitteln nach Anspruch 1 oder 2, wobei der erste Gelenkarm (131, 132) in Bezug auf den zweiten Gelenkarm (231, 232) in einem kürzeren Abstand von dem beweglichen Drehpunkt angeordnet ist.

4. Gerät (1) zum Zubereiten von Lebensmitteln nach einem oder mehreren der Ansprüche 1 bis 3, wobei der Gelenkmechanismus (31, 32) mit beweglichem Drehpunkt einen ersten unbeweglichen Arm (331, 332), der mit der ersten Heizplatte (10) verbunden ist, und einen zweiten unbeweglichen Arm (431, 432) umfasst, der mit der zweiten Heizplatte (20) verbunden ist,
wobei der erste Gelenkarm (131, 132) mit einem Ende an dem zweiten unbeweglichen Arm (431, 432) und mit dem gegenüberliegenden Ende an der ersten Heizplatte (10) angelenkt ist, und
wobei der zweite Gelenkarm (231, 232) mit einem Ende an dem ersten unbeweglichen Arm (331, 332) und mit dem gegenüberliegenden Ende an dem zweiten unbeweglichen Arm (431, 432) angelenkt ist.

5. Gerät (1) zum Zubereiten von Lebensmitteln nach Anspruch 4, wobei sich der erste unbewegliche Arm (331, 332) über die Ebene der ersten Heizfläche hinaus in Richtung der zweiten Heizfläche (120) erstreckt, und
wobei sich der zweite unbewegliche Arm (431, 432) über die Ebene der zweiten Heizfläche (120) hinaus in Richtung der ersten Heizfläche erstreckt.

6. Gerät (1) zum Zubereiten von Lebensmitteln nach Anspruch 5, wobei der erste Gelenkarm (131,132) an dem zweiten unbeweglichen Arm (431, 432) jenseits der Ebene der ersten Heizfläche in Richtung der zweiten Heizfläche (120) angelenkt ist, und
wobei der zweite Gelenkarm (231, 232) an dem ersten unbeweglichen Arm (331, 332) jenseits der Ebene der ersten Heizfläche in Richtung der zweiten Heizfläche (120) und an dem zweiten unbeweglichen Arm (431, 432) innerhalb der Ebene der zweiten Heizfläche (120) in Richtung der ersten Heizfläche angelenkt ist.

7. Gerät (1) zum Zubereiten von Lebensmitteln nach Anspruch 6, wobei die Verschiebungsmittel (31, 32) Verriegelungsmittel (531, 532) der relativen Position zwischen der ersten Heizplatte (10) und der zweiten Heizplatte (20) umfassen, wobei die Verriegelungsmittel (531, 532) ein Ende aufweisen, das an dem zweiten unbeweglichen Arm (431, 432) in der Ebene der zweiten Heizfläche (120) in Richtung der ersten Heizfläche vor dem zweiten Gelenkarm (231, 232) angelenkt ist, und das gegenüberliegende Ende aufweisen, das an dem zweiten Gelenkarm (231, 232) angelenkt ist.

## Revendications

1. - Appareil (1) de cuisson d'aliments comprenant :
- une première plaque chauffante (10) comportant une première surface chauffante et une seconde plaque chauffante (20) comportant une seconde surface chauffante (120) ;
- des moyens de déplacement (31, 32) aptes à déplacer en va-et-vient ladite première plaque chauffante (10) et ladite seconde plaque chauffante (20) entre une position de travail, dans laquelle ladite première surface chauffante et ladite seconde surface chauffante (120) sont disposées parallèlement l'une à l'autre et à la distance minimale de séparation, et une position de repos, dans laquelle ladite première surface chauffante et ladite seconde surface chauffante (120) sont disposées de manière inclinée l'une par rapport à l'autre et à la distance maximale de séparation ;
lesdits moyens de déplacement (31, 32) étant aptes à déplacer en va-et-vient ladite première plaque chauffante (10) et ladite seconde plaque chauffante (20) avec un mouvement de rotation-translation,
lesdits moyens de déplacement (31, 32) comprenant au moins un mécanisme articulé avec un point d'appui mobile, apte à définir ledit mouvement de rotation-translation avec deux degrés de liberté,
ledit mécanisme articulé (31, 32) avec un point d'appui mobile comprenant un premier bras articulé (131, 132) et un second bras articulé (231, 232) définis par deux éléments séparés et reliés de manière fonctionnelle à ladite première plaque chauffante (10) et à ladite seconde plaque chauffante (20) de façon à définir ledit mouvement de rotation-translation, **caractérisé par le fait que** ledit premier bras articulé (131, 132) a une extension plus courte par rapport audit second bras articulé (231, 232).

2. - Appareil (1) de cuisson d'aliments selon la revendication 1, dans lequel ledit mécanisme articulé (31, 32) avec un point d'appui mobile est apte à déplacer ladite première plaque chauffante (10) par rapport à ladite seconde plaque chauffante (20).

3. - Appareil (1) de cuisson d'aliments selon la revendication 1 ou 2, dans lequel ledit premier bras articulé (131, 132) est disposé à une distance plus courte dudit point d'appui mobile par rapport audit second bras articulé (231, 232).

4. - Appareil (1) de cuisson d'aliments selon une ou plusieurs des revendications 1 à 3, dans lequel ledit mécanisme articulé (31, 32) avec un point d'appui mobile comprend un premier bras fixe (331, 332) accouplé à ladite première plaque chauffante (10) et un second bras fixe (431, 432) accouplé à ladite seconde plaque chauffante (20),
ledit premier bras articulé (131, 132) ayant une extrémité articulée audit second bras fixe (431, 432) et ayant l'extrémité opposée articulée à ladite première plaque chauffante (10), et
ledit second bras articulé (231, 232) ayant une extrémité articulée audit premier bras fixe (331, 332) et ayant l'extrémité opposée articulée audit second bras fixe (431, 432).

5. - Appareil (1) de cuisson d'aliments selon la revendication 4, dans lequel ledit premier bras fixe (331, 332) s'étend au-delà du plan de ladite première surface chauffante vers ladite seconde surface chauffante (120), et
ledit second bras fixe (431, 432) s'étendant au-delà du plan de ladite seconde surface chauffante (120) vers ladite première surface chauffante.

6. - Appareil (1) de cuisson d'aliments selon la revendication 5, dans lequel ledit premier bras articulé (131, 132) est articulé audit second bras fixe (431, 432) au-delà du plan de ladite première surface chauffante vers ladite seconde surface chauffante (120), et
ledit second bras articulé (231, 232) étant articulé audit premier bras fixe (331, 332) au-delà du plan de ladite première surface chauffante vers ladite seconde surface chauffante (120) et audit second bras fixe (431, 432) dans le plan de ladite seconde surface chauffante (120) vers ladite première surface chauffante.

7. - Appareil (1) de cuisson d'aliments selon la revendication 6, dans lequel lesdits moyens de déplacement (31, 32) comprennent des moyens de verrouillage (531, 532) de la position relative entre ladite première plaque chauffante (10) et ladite seconde plaque chauffante (20), lesdits moyens de verrouillage (531, 532) ayant une extrémité articulée audit second bras fixe (431, 432) dans le plan de ladite seconde surface chauffante (120) vers ladite première surface chauffante avant ledit second bras articulé (231, 232), et ayant l'extrémité opposée articulée audit second bras articulé (231, 232).
